# EUROPÄISCHE PATENTANMELDUNG

(11) **EP 4 725 848 A1**
(43) Veröffentlichungstag der Anmeldung: **15.04.2026**
(21) Anmeldenummer: 25207939.7
(22) Anmeldetag: 10.10.2025
(51) Int. Cl.: B64G 1/24

(54) **SICHERUNGSSYSTEM FÜR WICHTIGE ODER KRITISCHE TECHNISCHE FUNKTIONALITÄTEN IM ZUSAMMENHANG MIT DEM BETRIEB EINES RAUMFAHRZEUGS UND VERFAHREN ZUM BETRIEB DES SICHERUNGSSYSTEMS**

(30) Priorität: 10.10.2024 DE 102024129228; 21.10.2024 DE 102024130517
(71) Anmelder: OHB System AG, 28359 Bremen (DE)
(72) Erfinder: Hönle, Alfred, 86609 Donauwörth (DE); Göhler, Eckart, 88570 Markt Schwaben (DE); Nickl, Helmut, 82211 Herrsching (DE)
(74) Vertreter: Hoener, Matthias

(57) **Zusammenfassung**

Die Erfindung schafft ein Sicherungssystem (10) für wichtige technische Funktionalitäten im Zusammenhang mit dem Betrieb eines Raumfahrzeugs sowie ein Verfahren zum Betrieb des Sicherungssystems (10), das sich als besonders sicher und zuverlässig erweist. Das wird dadurch erreicht, dass mindestens eine Interlock-Software (12, 13) und mindestens eine Anwendungs-Software (11) einer Hardware (15, 29) zusammen auf einem Prozessor des Systems, aber durch einen Hypervisor (14) getrennt voneinander, ausführbar sind.

## Beschreibung

Die vorliegende Erfindung betrifft ein Sicherungssystem für wichtige oder kritische technische Funktionalitäten im Zusammenhang mit dem Betrieb eines Raumfahrzeugs gemäß Anspruch 1. Des Weiteren betrifft die Erfindung ein Verfahren zum Betrieb des Sicherungssystems für wichtige oder kritische technische Funktionalitäten im Zusammenhang mit dem Betrieb eines Raumfahrzeugs gemäß Anspruch 11.

Insbesondere für den Betrieb von Raumfahrzeugen, wie beispielsweise Satelliten aber auch Raumstationen, ist die Sicherung und insbesondere die Überwachung von wichtigen und missionskritischen Bereichen von außerordentlicher Bedeutung. Bei einer technischen Verschlechterung oder einem Ausfall derartiger technischer Bereiche kann der Betrieb des Raumfahrzeugs im Weltraum negativ beeinträchtigt oder sogar beendet werden. Daher wird in diesem Zusammenhang auch von wichtigen oder kritischen technischen Funktionalitäten im Zusammenhang mit dem Betrieb von Raumfahrzeugen gesprochen. Insbesondere bei der Verwendung von Software, beispielsweise zur Steuerung einer Hardware, in einem missionskritischen Bereich, spielt es eine herausragende Rolle, dass eine technische Verschlechterung oder sogar der Ausfall des Systems durch Fehlverhalten der zugehörigen on-board-Software hervorgerufen werden kann. Solch ein Fehlverhalten der on-board-Software kann beispielsweise aus latenten Fehlern aufgrund kosmischer Strahlung oder auch durch Versagen von Subsystemen resultieren.

Im Bereich der Raumfahrt werden an Betriebssysteme bzw. Steuerungssysteme extrem hohe Anforderungen an die Zuverlässigkeit der technischen Systeme gestellt. Dies gestaltet sich als besonders herausfordernd, da insbesondere durch die im Weltraum herrschenden hohen Temperaturdifferenzen und die geringe Atmosphäre bzw. das Vakuum extreme äußere Bedingungen herrschen. Gleichzeitig wird eine hohe Laufzeit der einzelnen technischen Komponenten gefordert, und zwar ohne dass die Möglichkeit besteht, direkte Reparaturmaßnahmen durchzuführen. Zudem kann ein Ausfall kritischer Systeme, insbesondere in der bemannten Raumfahrt, drastische Folgen haben.

Dementsprechend werden typischerweise Technologien verwendet, die das Ausfallrisiko niedrig halten, wie zum Beispiel redundant aufgebaute Systeme oder Systeme, die sich einseitig oder gegenseitig überwachen. Für letztere Anwendungen kann ein Interlock (Schutzvorrichtung) verwendet werden. Diese Vorrichtung bewirkt, dass im Fall einer kritischen Situation eine automatische und sofortige Abschaltung einer Funktionalität im Speziellen und eine Zustandsänderung in einen sicheren Bereich im Allgemeinen durchgeführt wird.

Üblicherweise wird ein Interlock als eine Hardware-Komponente realisiert (also z.B. als Elektronik). Das liegt auch daran, dass die Entwicklung und Qualifizierung für kritische Software sehr aufwendig sind. Im Folgenden wird daher der übliche Fall angenommen, dass eine normale technische Funktionalität des Systems durch eine Anwendungs-Software realisiert wird, welche typischerweise, da sie sehr umfangreich sein kann, aus Kostengründen mit einer möglichst geringen Kritikalitätsstufe qualifiziert werden soll. Beispielsweise soll die Anwendungs-Software nur mit der *ECSS Critical Category* "C" eingestuft werden. Kritische Funktionen dieser Anwendungs-Software werden direkt oder indirekt im System zusätzlich von on-board-Hardware-Interlocks überwacht.

Die Realisierung eines Interlocks in der Hardware hat jedoch einige Nachteile:
- Es ist nur eine sehr eingeschränkte Funktionalität möglich. So gestaltet es sich als sehr aufwendig, Verknüpfungen von verschiedenen Ereignissen zu erstellen oder auf ein Ereignis mit einer bestimmten Vorgeschichte zu reagieren. Auch brechen Hardware-Interlocks typischerweise einfach die überwachte Funktion ab und bieten keine differenzierten Reaktionen.
- Die Implementierung muss typischerweise früh im Lebenszyklus des Gesamt-Systems erfolgen, also zu einem Zeitpunkt, zu dem die Entwicklung des Gesamt-Systems noch nicht abgeschlossen ist und somit alle Detail-Funktionalitäten des Gesamt-Systems noch nicht bekannt sind. Eine Implementierung in der Hardware ist sehr unflexibel und kann meist nicht im Weltraum bei anderen Randbedingungen (zum Beispiel erfolgte Alterung im Gesamt-System aufgrund von Strahlung) geändert werden. Bei der Verwendung einer Software lassen sich hingegen von der Erde aus Uploads einer neuen Software-Version oder einer neuen Konfiguration der Software für den Satelliten ohne Weiteres realisieren.
- Wegen der notwendigen frühen Definition und der wenig flexiblen Implementierung in der Hardware müssen Hardware-Interlocks in gewissen engen Grenzen jedoch konfigurierbar sein (zum Beispiel die absolute Größe der einzelnen Schwellenwerte). Diese Konfiguration wiederum wird in der Regel durch die Software erfolgen müssen, woraus sich aber eine potentielle Schwachstelle dieser Lösung ergibt, da die Software die Hardware, die sie überwachen soll, beeinflussen könnte.
- Hardware erfordert zusätzliche Ressourcen für Gewicht, Platz und Energieversorgung.

Viele dieser Nachteile können durch eine Software-Implementierung gelöst werden. Allerdings würde bei einer Interlock-Software, welche direkt in die Anwendungs-Software integriert ist, die Kritikalität der gesamten Software erhöhen, da nicht ausgeschlossen werden kann, dass die Anwendungs-Software die Interlock-Software in ihrer Funktionalität beeinflusst.

Davon ausgehend lag der vorliegenden Erfindung die Aufgabe zugrunde, ein Sicherungssystem für wichtige technische Funktionalitäten im Zusammenhang mit dem Betrieb eines Raumfahrzeugs sowie ein Verfahren zum Betrieb des Sicherungssystems zu schaffen, das sich als besonders sicher und zuverlässig erweist.

Eine Lösung dieser Aufgabe wird durch die Merkmale des Anspruchs 1 beschrieben. Demnach ist es vorgesehen, dass ein Sicherungssystem für wichtige oder kritische technische Funktionalitäten im Zusammenhang mit dem Betrieb eines Raumfahrzeugs mindestens eine Anwendungs-Software für den Betrieb der Hardware und mindestens eine Interlock-Software zum Überwachen der Funktionalitäten und/oder der Anwendungs-Software und mindestens einen Prozessor aufweist, wobei die Funktionalitäten durch mindestens eine Hardware ausführbar sind. Des Weiteren weist das System einen Hypervisor auf, wobei die Interlock-Software und die Anwendungs-Software zusammen auf dem Prozessor, aber durch den Hypervisor getrennt voneinander, ausführbar sind. Durch diese Merkmale gestaltet sich des Sicherungssystem als besonders sicher und zuverlässig. Die Erfindung sieht es außerdem vor, dass die Anwendungs-Software und die Interlock-Software durch den Hypervisor räumlich und zeitlich voneinander getrennt sind, wobei die Anwendungs-Software und die Interlock-Software in verschiedenen, insbesondere unabhängigen, Partitionen des Hypervisors ausführbar sind. Durch diese räumliche sowie zeitliche Trennung der beiden Softwares gestaltet sich das Sicherungssystem als besonders zuverlässig, da dadurch vermeidbar ist, dass sich die beiden verschiedenen Softwares gegenseitig beeinflussen. Insbesondere die Trennung der Software auf verschiedene Partitionen des Hypervisors führt dazu, dass das System besonders sicher ist. Des Weiteren sieht es die Erfindung vor, dass eine erste Interlock-Software (Typ A) dazu ausgebildet ist, alle oder einige erfasste Raumfahrzeug-Systemparameter zu kontrollieren und/oder zu überwachen. Darüber sieht es die Erfindung vor, dass eine zweite Interlock-Software (Typ B) dazu ausgebildet ist, mindestens eine Anwendungs-Software zu überwachen. Bei den Raumfahrzeug-Systemparametern kann es sich um sämtliche Werte und Parameter handeln, die für den Betrieb des Fahrzeugs, aber auch der Hardware wesentlich sind. Denkbare Parameter sind beispielsweise Temperaturen, Distanzen, Zeiten, sonstige Messdaten oder Parameter, die einen Zustand des Systems angeben. Bei der Anwendungs-Software handelt es sich in der Regel um Software zum Betreiben weiterer Anwendungen bzw. Hardware-Komponenten, die auf dem Fahrzeug zum Einsatz kommen.

Bevorzugt kann es die Erfindung vorsehen, dass die mindestens eine Anwendungs-Software und die mindestens eine erste Interlock-Software (Typ A) über Schnittstellen mit einer Hardware verbunden sind, wobei die Verbindung zwischen der Anwendungs-Software und der Hardware im Fehlerfall, festgestellt durch die Interlock-Software mit Hilfe der Raumfahrzeug-Systemparameter, durch die Interlock-Software über die Zugriffssteuerung trennbar ist.

Vorzugsweise ist es denkbar, dass über die Hardware die Raumfahrzeug-Systemparameter von der Anwendungs-Software und/oder der Interlock-Software (Typ A) kontrollierbar sind.

Insbesondere sieht es die Erfindung vor, dass die mindestens eine Anwendungs-Software und/oder die mindestens eine erste Interlock-Software (Typ A) mit mindestens einer Schnittstelle zur Übertragung von Raumfahrzeug-Systemparametern der Hardware verbunden sind und die Raumfahrzeug-Systemparameter von der Anwendungs-Software und/oder der Interlock-Software erfass- und verarbeitbar sind. Diese Schnittstellen können kabellos oder kabelgebunden sein. Durch diese direkte Verbindung der genannten Komponenten gestaltet sich insbesondere der Austausch von Informationen bzw. Daten als besonders effizient und zuverlässig. Es ist erfindungsgemäß vorgesehen, dass die Systemparameter nicht nur erfasst und ausgebildet bzw. verarbeitet werden, sondern es ist gleichermaßen vorgesehen, dass die Systemparameter von der Anwendungs-Software geändert werden können. Durch diese Änderungen kann über die Anwendungs-Software auf sich ändernde Situationen reagiert werden oder sonstige Anpassungen vorgenommen werden.

Ein weiteres Ausführungsbeispiel der Erfindung kann es vorsehen, dass die mindestens eine zweite Interlock-Software (Typ B) als Proxy ausgebildet ist und Schnittstellen aufweist, über welche weitere Partitionen des Hypervisors mit der zweiten Interlock-Software (Typ B) verbindbar sind, wobei die zweite Interlock-Software (Typ B) über die Schnittstellen mit verschiedenen, insbesondere mehreren, Hardwares verbindbar ist. Diese Typ B-Software ist dazu ausgebildet, direkt mit verschiedenen Hardware-Komponenten zu korrespondieren. Es ist außerdem denkbar, dass jeder weiteren Hardware jeweils eine Interlock-Software (Typ B) zugeordnet ist oder dass eine Interlock-Software (Typ B) mit mehreren Hardware-Komponenten in Verbindung steht.

Weiter ist es erfindungsgemäß denkbar, dass die mindestens eine zweite Interlock-Software (Typ B) mit der mindestens einen Anwendungs-Software verbunden ist und diese überwacht, wobei die Systemauswirkung der Anwendungs-Software auf definierte Hardware von der zweiten Interlock-Software kontrollierbar ist. Sobald hier eine Wirkung festgestellt wird, die einen Fehler oder ein Fehlverhalten der Hardware darstellt, ist es denkbar, dass die zweite Interlock-Software (Typ B) die Anwendungs-Software entsprechend ansteuert bzw. wenigstens kurzzeitig die Kontrolle der Hardware übernimmt.

Weiter kann es erfindungsgemäß vorgesehen sein, dass über die Hardware die Raumfahrzeug-Systemparameter von der Anwendungs-Software und/oder der Interlock-Software (Typ B) kontrollierbar sind.

Ein weiteres besonders vorteilhaftes Ausführungsbeispiel der Erfindung kann es vorsehen, dass die mindestens eine Anwendungs-Software und/oder die mindestens eine zweite Interlock-Software (Typ B) mit mindestens einer Schnittstelle zur Übertragung von Raumfahrzeug-Systemparametern der Hardware verbunden sind und die Raumfahrzeug-Systemparameter von der Anwendungs-Software und/oder der Interlock-Software erfass- und verarbeitbar sind.

Darüber hinaus sieht es ein weiteres mögliches Ausführungsbeispiel der Erfindung vor, dass die mindestens eine Anwendungs-Software zwar den jeweiligen Status der verschiedenen Typen von Interlock-Softwares auslesen kann, diese Interlock-Software jedoch nicht beeinflussen kann.

Schließlich kann es ein weiteres Ausführungsbeispiel der Erfindung vorsehen, dass die mindestens eine Interlock-Software ergänzbar ist durch mindestens ein Hardware-Interlock. Zusätzlich zu den beschriebenen Interlock-Softwares kann es vorgesehen sein, dass auch die Hardware-Komponenten selbst Interlocks aufweisen. Diese Interlocks der Hardware sind wiederum bei einem bevorzugten Ausführungsbeispiel durch die Interlock-Softwares kontrollierbar.

Eine weitere Lösung des eingangs genannten Problems wird durch die Maßnahmen des Anspruchs 11 beschrieben. Demnach ist es vorgesehen, dass für das Verfahren zum Betrieb eines Sicherungssystems für wichtige oder kritische technische Funktionalitäten im Zusammenhang mit dem Betrieb eines Raumfahrzeugs eine Interlok-Software und eine Anwendungs-Software zusammen auf einem Prozessor, aber durch einen Hypervisor getrennt ausgeführt werden. Die Funktionalitäten werden durch mindestens eine Hardware ausgeführt mit mindestens einem Prozessor. Des Weiteren umfasst das Verfahren die mindestens eine Anwendung-Software für den Betrieb der Hardware sowie die mindestens eine Interlock-Software zum Überwachen der Funktionalitäten und/oder der Anwendungs-Software. Des Weiteren umfasst das Sicherungssystem den Hypervisor. Durch diese Maßnahmen gestaltet sich das Verfahren zum Betrieb des Sicherungssystems als besonders sicher und zuverlässig. Bei den Funktionalitäten kann es sich beispielsweise um eine Messung handeln, das Heizen einer Komponente oder eines Prozessors, ein Kommunikationsvorgang bzw. Austausch von Daten, sonstige Versorgungsfunktionen im Zusammenhang mit dem Betrieb des Raumfahrzeugs oder dergleichen. Durch das beanspruchte Verfahren lassen sich wichtige Funkrealitäten, insbesondere wenn sie kritisch sind, auf eine sichere Art und Weise kontrollieren. Die Erfindung sieht es außerdem vor, dass die Anwendungs-Software und die Interlock-Software durch den Hypervisor räumlich und zeitlich voneinander getrennt betrieben werden, wobei die Anwendungs-Software und die Interlock-Software in verschiedenen, insbesondere unabhängigen Partitionen des Hypervisors ausgeführt werden. Darüber hinaus sieht es die Erfindung vor, dass durch eine erste Interlock-Software (Typ A) alle oder einige erfasste Raumfahrzeug-Systemparameter kontrolliert und/oder überwacht werden, wobei es des Weiteren denkbar ist, dass durch eine zweite Interlock-Software (Typ B) mindestens eine Anwendungs-Software überwacht wird.

Insbesondere sieht es die Erfindung vor, dass die mindestens eine Anwendungs-Software (11) und die mindestens eine erste Interlock-Software (Typ A) über Schnittstellen mit einer Hardware verbunden sind, wobei die Verbindung zwischen der Anwendungs-Software und der Hardware im Fehlerfall, festgestellt durch die Interlock-Software (12) mit Hilfe der Raumfahrzeug-Systemparameter, durch die Interlock-Software über die Zugriffssteuerung getrennt wird und nach Feststellung der Beendigung des Fehlerfalls durch die Interlock-Software die Trennung über die Zugriffssteuerung wieder aufgehoben werden kann.

Bevorzugt ist es außerdem denkbar, dass über die Hardware die Raumfahrzeug-Systemparameter von der Anwendungs-Software und/oder der ersten Interlock-Software (Typ A) kontrollierbar sind.

Ein besonders bevorzugtes Ausführungsbeispiel der Erfindung kann es vorsehen, dass die mindestens eine Anwendungs-Software und/oder die mindestens eine erste Interlock-Software (Typ A) mit einer Schnittstelle zur Übertragung von Raumfahrzeug-Systemparametern der Hardware verbunden sind und die Raumfahrzeug-Systemparameter von der Anwendungs-Software und/oder der Interlock-Software erfasst und verarbeitet werden.

Ein weiterer wichtiger Aspekt der Erfindung kann darin bestehen, dass das Erfassen und Verarbeiten kontinuierlich erfolgt. Dadurch wird eine durchgehende Sicherung des Systems gegenüber Fehlfunktionen erreicht. Nur durch diese Kontinuität des Verfahrens lassen sich insbesondere schwere Schäden an der Hardware vermeiden, um die Funktion des Raumfahrzeugs nicht zu gefährden.

Bevorzugt ist es außerdem denkbar, dass die mindestens eine zweite Interlock-Software (Typ B) als Proxy ausgebildet ist und Schnittstellen aufweist, über welche weitere Partitionen des Hypervisors mit der zweiten Interlock-Software (Typ B) verbunden werden, wobei die zweite Interlock-Software (Typ B) über die Schnittstellen mit verschiedenen, insbesondere mehreren, Hardwares verbunden wird.

Weiter besteht ein mögliches Ausführungsbeispiel der Erfindung darin, dass die mindestens eine zweite Interlock-Software (Typ B) mit der mindestens einen Anwendungs-Software verbunden ist und diese überwacht, wobei die Systemauswirkung der Anwendungs-Software auf definierte Hardware von der zweiten Interlock-Software (Typ B) kontrolliert wird.

Ein weiteres verteiltes Ausführungsbeispiel kann darin bestehen, dass über die Hardware die Raumfahrzeug-Systemparameter von der Anwendungs-Software und/oder der zweiten Interlock-Software (Typ B) kontrolliert werden.

Des Weiteren kann es erfindungsgemäß vorgesehen sein, dass die mindestens eine Anwendungs-Software und/oder die mindestens eine zweite Interlock-Software (Typ B) mit mindestens einer Schnittstelle zur Übertragung von Raumfahrzeug-Systemparametern der Hardware verbunden werden und die Raumfahrzeug-Systemparameter von der Anwendungs-Software und/oder der Interlock-Software erfass- und verarbeitbart werden.

Weiter ist es denkbar, dass die mindestens eine Anwendungs-Software zwar den jeweiligen Status der verschiedenen Typen von Interlock-Softwares auslesen kann, diese Interlock-Software jedoch nicht beeinflussen kann.

Vorzugsweise ist es erfindungsgemäß außerdem denkbar, dass die Interlock-Software zumindest einen Teil der Funktionalität der Anwendungs-Software übernimmt und die Hardware und damit das Raumfahrzeug-System in einen sicheren Zustand überführen kann, nachdem die Interlock-Software der Anwendungs-Software den Zugriff entzogen (Typ A) oder unterbunden (Typ B) hat, wenn Raumfahrzeug-Systemparameter als fehlerhaft oder mit Anomalien festgestellt werden und der Betrieb der Hardware durch die Anwendungs-Software wieder durch die Interlock-Software der Anwendungs-Software gewährt wird, wenn die Raumfahrzeug-Systemparameter als normal bewertet werden. Durch diese wenigstens teilweise sowie zeitweise oder auch ständige Übernahme der Funktionalität durch die Interlock-Software kann ein hohes Maß an Sicherung des Systems erreicht werden. Sobald der festgestellte Fehler bzw. das festgestellte Fehlverhalten behoben ist, kann die Interlock-Software die Kontrolle wieder an die Anwendungs-Software übergeben.

Schließlich kann es die Erfindung vorsehen, dass die mindestens eine Anwendungs-Software und die mindestens eine erste Interlock-Software (Typ A) mit der Hardware verbunden sind, wobei der Zugriff der Anwendungs-Software auf die Hardware von der Interlock-Software über die Zugriffssteuerung unterbunden wird, wenn ein Fehlerfall der Hardware festgestellt wird.

Ein mögliches Ausführungsbeispiel der Erfindung ist in den Figuren wiedergegeben. Diese zeigen:
- Fig. 1: eine Darstellung einer Prinzipskizze mit zwei verschiedenen Software-Interlocks,
- Fig. 2: eine Darstellung für einen möglichen Anwendungsfall, und
- Fig. 3: eine Darstellung für einen weiteren möglichen Anwendungsfall.

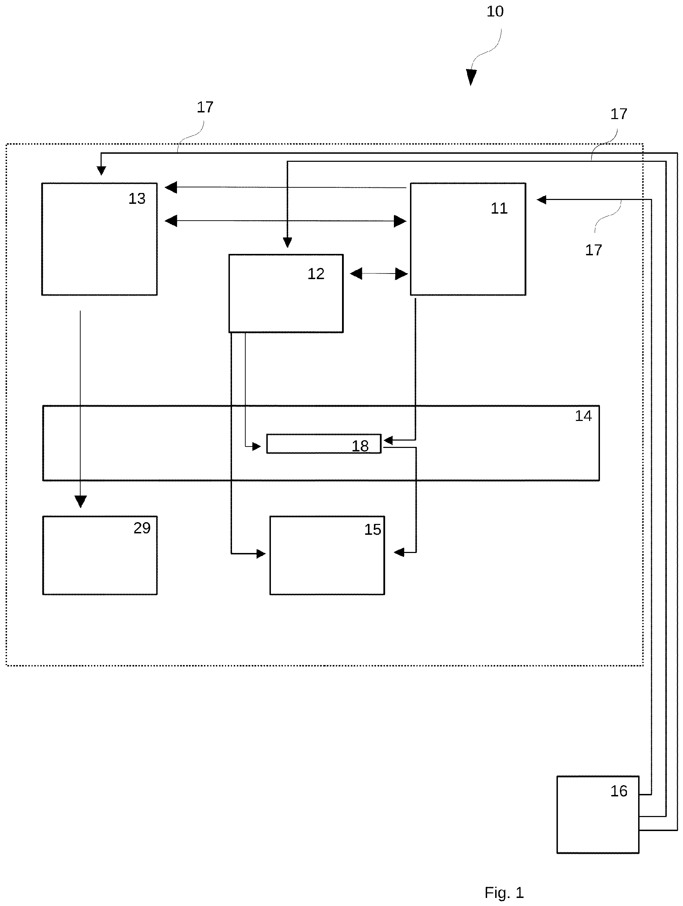

Bei dem in der Fig. 1 dargestellten Ausführungsbeispiel für ein Sicherungssystem 10 existiert im Wesentlichen eine Anwendungs-Software 11. Darüber hinaus sind bei dem Ausführungsbeispiel gemäß der Fig. 1 schematisch zwei Interlock-Softwares dargestellt, nämlich eine Interlock-Software (Typ A) 12 und eine Interlock-Software (Typ B) 13. Darüber hinaus ist es denkbar, dass diesem System weitere nicht dargestellte Anwendungs-Softwares zugeordnet werden. Diese Softwares, nämlich die Anwendungs-Software 11 sowie die beiden Interlock-Software (Typ A) 12 und Interlock-Software (Typ B) 13, werden in einem Hypervisor 14 auf verschiedenen Partitionen ausgeführt, wobei die einzelnen Bestandteile auf einem einzigen Prozessor laufen können. Die Kommunikation zwischen den einzelnen Partitionen auf dem Hypervisor 14 erfolgt über Hypervisor Inter-Partitionen-Kommunikation.

Die Anwendungs-Software 11 und die Interlock-Software (Typ A) 12 erfassen von der Hardware 15 regelmäßig Raumfahrzeug-Systemparameter 16 des Raumfahrzeugs. Bei dem in der Fig. 1 dargestellten Ausführungsbeispiel werden die Daten über die Schnittstelle 17 weitergeleitet. Bei der Hardware kann es sich beispielsweise um Sensoren, Kommunikationseinrichtungen, Einrichtungen zur Temperierung, Aktuatoren, Vorrichtungen zur Durchführung von mechanischer Arbeit oder dergleichen handeln. Die Raumfahrzeug-Systemparameter 16 enthalten die Systemparameter, also die Statusangaben oder Messwerte der Hardware, insbesondere aufbereitet, von einer entsprechenden Software, die hier nicht weiter spezifiziert werden soll, da sie zum Wesen der Erfindung nicht beiträgt.

In der Regel verarbeitet die Anwendungs-Software 11 Systemparameter fehlerfrei und kann darauf aufbauend mittels der Hardware 15 eine entsprechende Regelung im System durchführen. Die Systemparameter werden auch an die Interlock-Software (Typ A) 12 geleitet. Wenn diese Software eine anormale Situation in den Systemparametern entdeckt, entzieht sie der Anwendungs-Software 11 den Zugriff auf die Hardware 15 und übernimmt selbst eine reduzierte Form der Regelschleife, um eine kritische Situation, wie zum Beispiel Überhitzung des Instrumentes (wenn die Systemparameter Temperaturmessungen enthalten), abzuwenden. Entsprechen die Systemparameter wieder einer regulären Situation, wird der Zugriff auf die Hardware für die Anwendungs-Software 11 wieder gewährt. Dabei handelt es sich um eine kontinuierlich vorliegende Software-Funktionalität, d.h. um eine kontinuierliche Überwachung und nicht um einen einmaligen Vorgang. Diese Sperrung des Zugriffs der Anwendungs-Software 11 auf die Hardware 15 und die erneute Freigabe erfolgt über die Zugriffssteuerung 18. Nur wenn diese von der Interlock-Software (Typ A) 12 freigegeben ist, kann die Hardware 15 durch die Anwendungs-Software 11 gesteuert bzw. kontrolliert werden. Ansonsten erfolgt die Steuerung der Hardware 15 direkt über die Interlock-Software (Typ A) 12. Da die einzelnen Software-Einheiten voneinander getrennt sind, gestaltet sich dieses Sicherheitsverfahren als besonders zuverlässig.

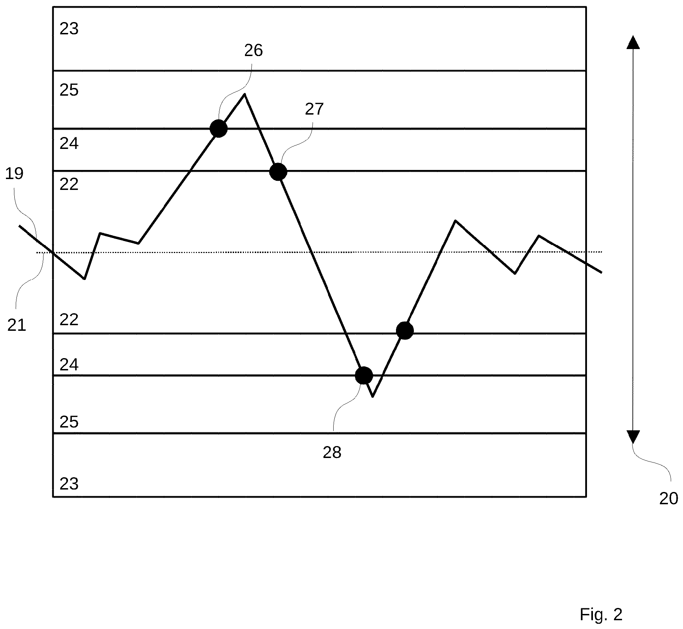

Dieses Verfahren ist in der Fig. 2 anhand eines Beispiels skizzenhaft dargestellt. Die Linie 19 beschreibt einen gemessenen zeitlichen Temperaturverlauf, der von einer Hardware geregelt wird. Auf der y-Achse 20 ist die Kritikalität des Temperaturverlaufs für die Hardware dargestellt. Während der mittlere Bereich 22, beschrieben durch die gepunktete Linie 21, den Normalbetrieb, also den Soll-Temperatur-Bereich, darstellt, beschreiben die Bereiche 23 die kritischen Bereiche für den gemessenen Systemparameter. Bei dem hier dargestellten Ausführungsbeispiel wird beim Übergang von dem weniger kritischen Bereich 24 zu dem kritischeren Bereich 25 die Steuerung des Heizprozesses bzw. der Hardware von der Interlock-Software (Typ A) 12 übernommen (Punkt 26) und derart kontrolliert, dass die gemessene Temperatur mit fortschreitender Zeit wieder abnimmt. Sobald bei dem hier dargestellten Ausführungsfall der Punkt 27 erreicht ist und die Temperatur wieder in den mittleren Bereich fällt, übergibt die Interlock-Software (Typ A) 12 die Kontrolle zurück an die Anwendungs-Software 11. Wenn auch im Folgenden die Temperatur sich ändert und den Punkt 28 erreicht, wird die Steuerung der Hardware erneut von der Interlock-Software (Typ A) 12 übernommen, bis sich der gemessene Systemparameter wenigstens nahezu konstant in dem mittleren Bereich 22 aufhält. Es sei ausdrücklich darauf hingewiesen, dass dieses Beispiel nur eines von einer Vielzahl verschiedener Anwendungsmöglichkeiten darstellt.

Neben der Interlock-Software (Typ A) 12 sieht das in der Fig. 1 dargestellte Ausführungsbeispiel des Sicherungssystems 10 einen weiteren Typ vor, nämlich die Interlock-Software (Typ B) 13. Diese Interlock-Software (Typ B) 13 dient der Überwachung der Anwendungs-Software 11 selbst. Es ist denkbar, dass die Anwendungs-Software 11 regelmäßig Zugriffe auf ein externes Gerät bzw. eine Hardware 29 durchführt und die Interlock-Software (Typ B) 13 überwacht, dass diese Zugriffe nicht eine bestimmte Häufigkeit in einem gewissen Zeitraum überschreiten. Dies könnte zum Beispiel ein Flash-Speicher sein, dessen Lebensdauer durch die Zahl der Lösch- /Schreibzugriffe limitiert ist. Stellt die Interlock-Software (Typ B) 13 fest, dass die Schreibfrequenz eine bestimmte Schwelle überschreitet, werden die Zugriffe auf die Hardware 29 nicht mehr durchgeführt. Hierbei ist zu beachten, dass die Anwendungs-Software 11 selbst keinen direkten Schreibzugriff auf die entsprechende Hardware 29 hat, sondern dies durch den Hypervisor 14 verhindert wird und somit der Zugriff der Anwendungs-Software 11 auf diese spezifische Hardware 29 nur über die Interlock-Software (Typ B) 13 erfolgen kann. Ansonsten könnte die Schutzfunktion der Interlock-Software (Typ B) 13 durch einen Fehler der Anwendungs-Software 11 umgangen werden. Auch bei dieser Anwendungs-Software 11 handelt es sich um eine kontinuierlich vorliegende Software-Funktionalität, d.h. um eine kontinuierliche Überwachung, nicht um einen einmaligen Vorgang.

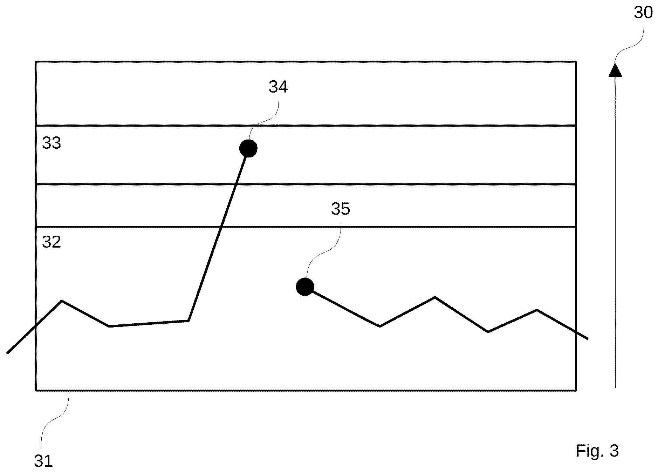

Dieses Anwendungsbeispiel ist ebenfalls stark schematisiert in der Fig. 3 dargestellt. Auch dort wird durch die y-Achse 30 die Kritikalität des Zustandes wiedergegeben. Auf der x-Achse 31 ist die Anzahl der Schreibzugriffe auf die Hardware 29 wiedergegeben. Wenn diese Anzahl aus dem normalen Bereich 32 in den kritischen Bereich 33 tritt (Punkt 34) wird die Steuerung der Hardware 29 von der Interlock-Software (Typ B) 13 übernommen und die Rate des Zugriffs zurück in den Bereich 32 gesetzt (Punkt 35).

Generell ist es für das Verfahren notwendig, dass die Anwendungs-Software 11 keine Möglichkeit hat, die verschiedenen Interlocks zu beeinflussen, sodass die verschiedenen Teile auf den Partitionen getrennt betrachtet werden können. Die Anwendungs-Software 11 hat im operationellen Betrieb nur die Möglichkeit, den Status der Interlocks abzufragen.

Neben der genannten allgemeinen Trennung der Softwareteile mit verschiedenen Kritikalitäten wird die Zugriffsverwaltung durch die Interlocks unterschiedlich gehandhabt. Für die Interlock-Software (Typ A) 12 ist es vorgesehen, dass die Interlock-Software 12 und die Anwendungs-Software 11 beide Zugriffe auf die Hardware 15 via Memory-Maped IO haben, d. h. im Nominalfall kommuniziert die Anwendungs-Software 11 mit der Hardware 15 durch Speicherzugriffe (und Interrupts). Durch eine Funktions-Erweiterung des Hypervisors 14 können diese Zugriffe unterbunden werden, d. h. der Speicherzugriff wird durch den Hypervisors 14 gesteuert.

Es ist außerdem denkbar, dass die Interlock-Software (Typ A) 12 auf diese Funktion des Hypervisors 14 Zugriff bekommt, damit die Kommunikation der Anwendungs-Software 11 im Gutfall gewährt und im Fehlerfall blockiert werden kann. Für die Anwendungs-Software 11 kann diese Kommunikationsblockade quasi unsichtbar gestaltet werden, d. h., sie hat keine Information darüber, dass der Schreibzugriff entzogen wurde; es ist aber genauso gut möglich, dass sie Informationen über die Kommunikationsblockade erlangen kann.

Die Interlock-Software (Typ B) 13 arbeitet als Proxy, d.h., sie bietet den anderen Partitionen (via Hypervisor Inter-Partition-Kommunikation) Software-Schnittstellen an, über die diese Hardwarefunktionalitäten, auf die nur die Interlock-Software (Typ B) 13 Zugriff hat, ansteuern können. Die Interlock-Software (Typ B) 13 kann dann den Zugriff auf die Hardwarefunkqualitäten, basierend auf in der Interlock-Software (Typ B) 13 festgelegten Bedingungen, gewähren oder blockieren. Damit lassen sich auch Hardwarefunktionalitäten kontrollieren, die über generische Schnittstellen und Kommunikationsprotokolle angesteuert werden. So kann die Interlock-Software (Typ B) 13 beispielsweise eine einfache 2-Punkt-Temperatur-Regelung gemäß Fig. 2 durchführen. Die Regelung erfolgt dabei mittels Kommandos zum Ein- und Ausschalten einer Heizung, die Teil eines Kommunikationsprotokolls über eine entsprechende Hardware-Schnittstelle sind. Unter normalen Bedingungen erfolgt die Regelung in der Anwendungs-Software 11, d.h., diese kommandiert die Heizung über die Software-Schnittstellen der Interlock-Software (Typ B) 13. Die Interlock-Software (Typ B) 13 überprüft dabei kontinuierlich die Temperaturgrenzen. Liegt die Temperatur außerhalb der vorgegebenen Grenzen, so übernimmt die Interlock-Software (Typ B) 13 selbst die Ansteuerung der Heizung über die Hardware-Schnittstelle und verwirft die Anfragen der Anwendungs-Software 11, bis die Temperatur schließlich wieder innerhalb der zulässigen Grenzen liegt. Dadurch lassen sich gezielt bestimmte Hardware-Steuer-Funktionalitäten für die Anwendungs-Software 11 sperren, ohne gleichzeitig andere Funktionen zu blockieren.

### Bezugszeichenliste:

- 10: Sicherungssystem
- 11: Anwendungs-Software
- 12: Interlock-Software (Typ A)
- 13: Interlock-Software (Typ B)
- 14: Hypervisor
- 15: Hardware
- 16: Raumfahrzeug-Systemparameter
- 17: Schnittstelle
- 18: Zugriffssteuerung
- 19: Linie
- 20: y-Achse
- 21: gepunktete Linie
- 22: mittlerer Bereich
- 23: Bereich
- 24: Bereich
- 25: Bereich
- 26: Punkt
- 27: Punkt
- 28: Punkt
- 29: Hardware
- 30: y-Achse
- 31: x-Achse
- 32: Bereich
- 33: Bereich
- 34: Punkt
- 35: Punkt

## Patentansprüche

1. Sicherungssystem (10) für wichtige oder kritische technische Funktionalitäten im Zusammenhang mit dem Betrieb eines Raumfahrzeugs, wobei die Funktionalitäten durch mindestens eine Hardware (15, 29) ausführbar sind mit mindestens einem Prozessor, mindestens einer Anwendungs-Software (11) für den Betrieb der Hardware (15, 29) und mindestens einer Interlock-Software (12, 13) zum Überwachen der Funktionalitäten und/oder der Anwendungs-Software (11) und einem Hypervisor (14), wobei die Interlock-Software (12, 13) und die Anwendungs-Software (11) zusammen auf dem Prozessor, aber durch den Hypervisor (14) getrennt voneinander, ausführbar sind, wobei die Anwendungs-Software (11) und die Interlock-Software (12, 13) durch den Hypervisor (14) räumlich und zeitlich voneinander getrennt sind, und wobei die Anwendungs-Software (11) und die Interlock-Software (12, 13) in verschiedenen, unabhängigen Partitionen des Hypervisors (14) ausführbar sind, und wobei eine erste Interlock-Software (Typ A) (12) dazu ausgebildet ist, alle oder einige erfasste Raumfahrzeug-Systemparameter (16) zu überwachen, und wobei eine zweite Interlock-Software (Typ B) (13) dazu ausgebildet ist, mindestens eine Anwendungs-Software (11) zu überwachen.

2. Sicherungssystem (10) nach Anspruch 1, **dadurch gekennzeichnet, dass** die mindestens eine Anwendungs-Software (11) und die mindestens eine erste Interlock-Software (Typ A) (12) über Schnittstellen mit einer Hardware (15) verbunden sind, wobei die Verbindung zwischen der Anwendungs-Software (11) und der Hardware (15) im Fehlerfall, festgestellt durch die Interlock-Software (Typ A) (12) mit Hilfe der Raumfahrzeug-Systemparameter (16), durch die Interlock-Software (Typ A) (12) über die Zugriffssteuerung (18) trennbar ist.

3. Sicherungssystem (10) nach Anspruch 1 oder 2, **dadurch gekennzeichnet, dass** über die Hardware (15) die Raumfahrzeug-Systemparameter (16) von der Anwendungs-Software (11) und/oder der Interlock-Software (Typ A) (12) kontrollierbar sind.

4. Sicherungssystem (10) nach einem der vorangegangenen Ansprüche, **dadurch gekennzeichnet, dass** die mindestens eine Anwendungs-Software (11) und/oder die mindestens eine erste Interlock-Software (Typ A) (12) mit mindestens einer Schnittstelle (17) zur Übertragung von Raumfahrzeug-Systemparametern (16) der Hardware (15) verbunden sind und die Raumfahrzeug-Systemparameter (16) von der Anwendungs-Software (11) und/oder der Interlock-Software (12) erfass- und verarbeitbar sind.

5. Sicherungssystem (10) nach einem der vorangegangenen Ansprüche, **dadurch gekennzeichnet, dass** die mindestens eine zweite Interlock-Software (Typ B) (13) als Proxy ausgebildet ist und Schnittstellen (aufweist, über welche weitere Partitionen des Hypervisors (14) mit der zweiten Interlock-Software (Typ B) (13) verbindbar sind, wobei die zweite Interlock-Software (Typ B) (13) über die Schnittstellen (17) mit verschiedenen, insbesondere mehreren, Hardwares (29) verbindbar ist.

6. Sicherungssystem (10) nach einem der vorangegangenen Ansprüche, **dadurch gekennzeichnet, dass** die mindestens eine zweite Interlock-Software (Typ B) (13) mit der mindestens einen Anwendungs-Software (11) verbunden ist und diese überwacht, wobei die Systemauswirkung der Anwendungs-Software (11) auf definierte Hardware (29) von der zweiten Interlock-Software (Typ B) (13) kontrollierbar ist.

7. Sicherungssystem (10) nach einem der vorangegangenen Ansprüche, **dadurch gekennzeichnet, dass** über die Hardware (29) die Raumfahrzeug-Systemparameter (16) von der Anwendungs-Software (11) und/oder der Interlock-Software (Typ B) (13) kontrollierbar sind.

8. Sicherungssystem (10) nach einem der vorangegangenen Ansprüche, **dadurch gekennzeichnet, dass** die mindestens eine Anwendungs-Software (11) und/oder die mindestens eine zweite Interlock-Software (Typ B) (13) mit mindestens einer Schnittstelle (17) zur Übertragung von Raumfahrzeug-Systemparametern (16) der Hardware (29) verbunden sind und die Raumfahrzeug-Systemparameter (16) von der Anwendungs-Software (11) und/oder der Interlock-Software (13) erfass- und verarbeitbar sind.

9. Sicherungssystem (10) nach einem der vorangegangenen Ansprüche, **dadurch gekennzeichnet, dass** die mindestens eine Anwendungs-Software (11) zwar den jeweiligen Status der verschiedenen Typen von Interlock-Software (12, 13) auslesen kann, diese Interlock-Software (12, 13) jedoch nicht beeinflussen kann.

10. Sicherungssystem (10) nach einem der vorangegangenen Ansprüche, **dadurch gekennzeichnet, dass** die mindestens eine Interlock-Software (12, 13) ergänzbar ist durch mindestens ein Hardware-Interlock.

11. Verfahren zum Betrieb eines Sicherungssystems (10) für wichtige oder kritische technische Funktionalitäten im Zusammenhang mit dem Betrieb eines Raumfahrzeugs, wobei die Funktionalitäten durch mindestens eine Hardware (15, 29) ausgeführt werden mit mindestens einem Prozessor, mindestens einer Anwendungs-Software (11) für den Betrieb der Hardware (15, 29) und mindestens einer Interlock-Software (12, 13) zum Überwachen der Funktionalitäten und/oder der Anwendungs-Software (11) und einem Hypervisor (14), wobei die Interlock-Software (12, 13) und die Anwendungs-Software (11) zusammen auf dem Prozessor, aber durch den Hypervisor (14) getrennt voneinander, ausgeführt werden, wobei die Anwendungs-Software (11) und die Interlock-Software (12, 13) durch den Hypervisor (14) räumlich und zeitlich voneinander getrennt betrieben werden, wobei die Anwendungs-Software (11) und die Interlock-Software (12, 13) in verschiedenen, unabhängigen Partitionen des Hypervisors (14) ausgeführt werden, und wobei durch eine erste Interlock-Software (Typ A) (12) alle oder einige erfasste Raumfahrzeug-Systemparameter (16) überwacht werden, und wobei durch eine zweite Interlock-Software (Typ B) (13) mindestens eine Anwendungs-Software (11) überwacht wird.

12. Verfahren nach Anspruch 11, **dadurch gekennzeichnet, dass** die mindestens eine Anwendungs-Software (11) und die mindestens eine erste Interlock-Software (Typ A) (12) über Schnittstellen (17) mit einer Hardware (15) verbunden sind, wobei die Verbindung zwischen der Anwendungs-Software (11) und der Hardware (15) im Fehlerfall, festgestellt durch die Interlock-Software (Typ A) (12) mit Hilfe der Raumfahrzeug-Systemparameter (16), durch die Interlock-Software (Typ A) (12) über die Zugriffssteuerung (18) getrennt wird und nach Feststellung der Beendigung des Fehlerfalls durch die Interlock-Software (Typ A) (12) die Trennung über die Zugriffssteuerung (18) wieder aufgehoben werden kann.

13. Verfahren nach Anspruch 11 oder 12, **dadurch gekennzeichnet, dass** über die Hardware (15) die Raumfahrzeug-Systemparameter (16) von der Anwendungs-Software (11) und/oder der Interlock-Software (Typ A) (12) kontrollierbar sind.

14. Verfahren nach einem der Ansprüche 11 bis 13, **dadurch gekennzeichnet, dass** die mindestens eine Anwendungs-Software (11) und/oder die mindestens eine erste Interlock-Software (Typ A) (12) mit einer Schnittstelle (17) zur Übertragung von Raumfahrzeug-Systemparametern (16) der Hardware (15) verbunden sind und die Raumfahrzeug-Systemparameter (16) von der Anwendungs-Software (11) und/oder der Interlock-Software (Typ A) (12) erfasst und verarbeitet werden.

15. Verfahren nach Anspruch 14, **dadurch gekennzeichnet, dass** das Erfassen und Verarbeiten kontinuierlich erfolgt.

16. Verfahren nach einem der Ansprüche 11 bis 15, **dadurch gekennzeichnet, dass** die mindestens eine zweite Interlock-Software (Typ B) (13) als Proxy ausgebildet ist und Schnittstellen (17) aufweist, über welche weitere Partitionen des Hypervisors (14) mit der zweiten Interlock-Software (Typ B) (13) verbunden werden, wobei die zweite Interlock-Software (Typ B) (13) über die Schnittstellen (17) mit verschiedenen, insbesondere mehreren, Hardwares (29) verbunden wird.

17. Verfahren nach einem der Ansprüche 11 bis 16, **dadurch gekennzeichnet, dass** die mindestens eine zweite Interlock-Software (Typ B) (13) mit der mindestens einen Anwendungs-Software (11) verbunden ist und diese überwacht, wobei die Systemauswirkung der Anwendungs-Software (11) auf definierte Hardware (29) von der zweiten Interlock-Software (Typ B) (13) kontrolliert wird.

18. Verfahren nach einem der Ansprüche 11 bis 17, **dadurch gekennzeichnet, dass** über die Hardware (29) die Raumfahrzeug-Systemparameter (16) von der Anwendungs-Software (11) und/oder der Interlock-Software (Typ B) (13) kontrolliert werden.

19. Verfahren nach einem der Ansprüche 11 bis 18, **dadurch gekennzeichnet, dass** die mindestens eine Anwendungs-Software (11) und/oder die mindestens eine zweite Interlock-Software (Typ B) (13) mit mindestens einer Schnittstelle (17) zur Übertragung von Raumfahrzeug-Systemparametern (16) der Hardware (29) verbunden werden und die Raumfahrzeug-Systemparameter (16) von der Anwendungs-Software (11) und/oder der Interlock-Software (Typ B) (13) erfasst- und verarbeitet werden.

20. Verfahren nach einem der Ansprüche 11 bis 19, **dadurch gekennzeichnet, dass** die mindestens eine Anwendungs-Software (11) zwar den jeweiligen Status der verschiedenen Typen von Interlock-Software (12, 13) auslesen kann, diese Interlock-Software (12, 13) jedoch nicht beeinflussen kann.

21. Verfahren nach einem der Ansprüche 11 bis 20, **dadurch gekennzeichnet, dass** die Interlock-Software (12, 13) zumindest einen Teil der Funktionalität der Anwendungs-Software (11) übernimmt und die Hardware (15, 29) und damit das Raumfahrzeug-System in einen sicheren Zustand überführen kann, nachdem die Interlock-Software (12, 13) der Anwendungs-Software (11) den Zugriff entzogen (Typ A) (12) oder unterbunden (Typ B) (13) hat, wenn Raumfahrzeug-Systemparameter (16) als fehlerhaft oder mit Anomalien festgestellt werden und der Betrieb der Hardware (15, 29) durch die Anwendungs-Software (11) wieder durch die Interlock-Software (12, 13) der Anwendungs-Software (11) gewährt wird, wenn die Raumfahrzeug-Systemparameter (16) als normal bewertet werden.

22. Verfahren nach einem der Ansprüche 11 bis 21, **dadurch gekennzeichnet, dass** die mindestens eine Anwendungs-Software (11) und die mindestens eine erste Interlock-Software (Typ A) (12) mit der Hardware (15) verbunden sind, wobei der Zugriff der Anwendungs-Software (11) auf die Hardware (15) von der Interlock-Software (Typ A) (12) über die Zugriffssteuerung (18) unterbunden wird, wenn ein Fehlerfall der Hardware (15) festgestellt wird.
